# EUROPEAN PATENT APPLICATION

(11) **EP 2 587 324 A2**
(43) Date of publication of application: **01.05.2013**
(21) Application number: 12190236.5
(22) Date of filing: 26.10.2012
(51) Int. Cl.: G05B 19/409

(54) **Wood machining method and apparatus**

(30) Priority: 28.10.2011 IT MO20110275
(71) Applicant: SCM Group S.p.A., 47900 Rimini (IT)
(72) Inventor: Ratti, Federico, 47824 Poggio Berni (Rimini) (IT)
(74) Representative: Villanova, Massimo

(57) **Abstract**

A method is disclosed for assisting an operator to enter data into a computer memory connected to a control unit that governs an apparatus for machining a workpiece made of wood or a similar to wood material, according to which there is shown, on a screen of a graphic user interface, a pictogram that represents a panel to be machined and a graphic highlighting of the length of the panel to prompt the operator to enter the length value; after said value has been entered in the computer memory, a graphic highlighting of the width of the panel is shown on the screen to prompt the operator to enter the width value of the panel.

## Description

### Background of the invention

The invention relates to a method and an apparatus for machining wood or similar to wood material.

Specifically but not exclusively, the invention can be advantageously applied in a numerically controlled machining centre for machining panels made of wood or similar to wood material.

One of the problems of numerically controlled machining centres for machining wood is that of entering, into the computer memory associated with the programmable control unit that governs the machining centre, the data relating to the features of the workpiece (in particular the dimensions of the workpiece) before the operating unit performs the various programmed machinings on the workpiece. This preparatory step requires particular attention on the part of the operator entrusted with setting up the machine. Further, it is necessary for the operator to be previously trained to learn the data-entry procedure. Accordingly, the step of setting up a wood-machining centre has to be conducted by expert personnel and entails, in all cases, a relatively high risk of errors in entering the data required for starting machining, such as, for example, the data relating to the dimensions of the workpiece.

### Summary of the invention

One object of the invention is to overcome one or more of the prior-art drawbacks mentioned above.

One advantage is to provide a method for facilitating entering the data required to start machining in a numerically controlled machining centre, such as, for example, the data relating to the dimensions of the workpiece and/or the positions of the machinings to be performed on the workpiece.

One advantage is to devise a simple and intuitive method for assisting an operator to enter data into a computer memory connected to a control unit that governs an apparatus for machining a workpiece made of wood or a similar to wood material.

One advantage is to provide a method that enables data to be entered through a procedure that does not require specific operator training.

One advantage is to make available a method for facilitating the installation of an apparatus for machining a workpiece made of wood or a similar to wood material, in which an operator is guided step by step in the procedure of entering data relating to the dimensions of the workpiece and/or the positions of the machinings to be performed on the workpiece.

One advantage is enabling even a non-expert operator to correctly and easily run the procedure of entering the data relating to the dimensions of the workpiece, and/or the positions of the machinings to be performed on the workpiece, in a numerically controlled machining centre workpieces made of wood or similar to wood material.

One object of the present invention is to devise a constructionally simple and cheap apparatus, which is able to implement the above method.

Such objects and advantages, and still others, are achieved by the method and the apparatus according to any one of the claims set out below.

In one embodiment, an assistance method, in particular for assisting an operator to enter data into a computer memory connected to a control unit that governs an apparatus for machining a workpiece made of wood or similar to wood material, comprises the step of showing, on a screen of a graphic user interface, a pictogram that represents a workpiece and a graphic highlighting of a dimension of the workpiece to prompt the operator to enter the value of the first dimension; after said value has been entered in the computer memory, a graphic highlighting of a second dimension of the workpiece is shown on the screen to prompt the operator to enter the value of the second dimension.

### Brief description of the drawings

The invention can be better understood and implemented with reference to the attached drawings that illustrate an embodiment thereof by way of non-limiting example.

Figure 1 is a schematic top plan view of a machining centre for panels.

Figure 2 is a side view of figure 1.

Figures 3 to 8 illustrate some video pages on a screen of a graphic user interface for guiding an operator in entering data during setting up of a machining centre for panels.

### Detailed description

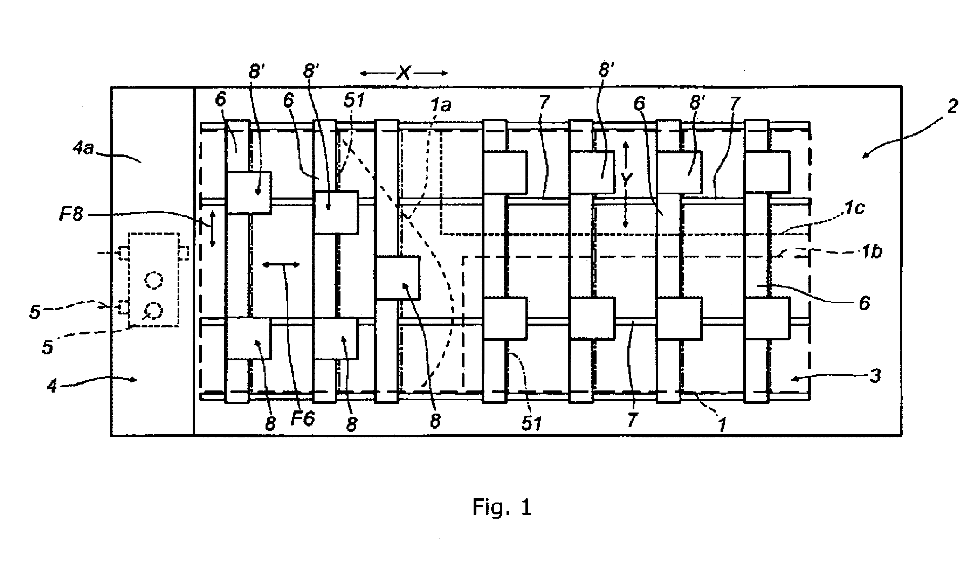

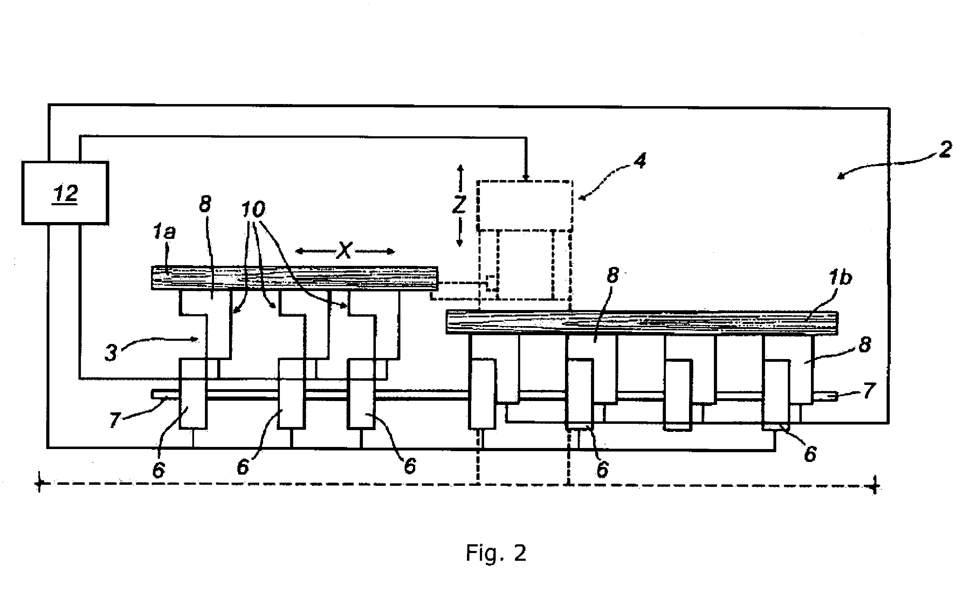

With reference to the aforesaid figures 1 and 2, with 1 a workpiece (unmachined panel) has been indicated and with 2 overall an apparatus has been indicated for machining workpieces made, in particular, of wood or of material that is similar to wood. In the case in point the apparatus comprises a numerically controlled machining centre for panels made of wood or similar to wood material. The apparatus 2 can be used for various machinings of the workpiece 1, for example for obtaining machined workpieces 1a, 1b and 1c (panels), in particular for removing chip machinings (for example milling, vertical and horizontal drilling, cuts, etc).

The apparatus 2 (machining centre) comprises a supporting plane (horizontal supporting plane 3) for at least one workpiece 1 (unmachined panel) and at least one operating unit 4, in which the supporting plane and the operating unit 4 are able to perform movements in relation to one another.

The operating unit 4 may be supported, as in the specific example, by a portal structure 4a. The structure 4a may be movable along the three main axes X, Y, Z. The operating unit 4 will be provided with tools 5 machining on the unmachined panel 1 to obtain at least one machined workpiece 1a, 1b or 1c. Each operating unit 4 will be arranged, in particular, above the resting plane 3.

An electronic control unit 12 is configured for governing the machining apparatus 2, in particular for controlling at least the operating unit 4. In particular, the electronic control unit 12 may be programmed for controlling the resting plane 3 and the operating units 4 in such a manner as to coordinate the movements of the operating units 4 in order to perform the programmed operations. In general, the plane 3 and the operating units 4 may be movable in relation to one another at least along three main movement axes (X, Y, Z) controlled by the control unit.

The supporting plane comprises a plurality of crosspieces 6 (in the form of bars) supported by a base formed, for example, by longitudinal beams 7. Each crosspiece 6 has at least one fixing member for locking the workpiece in the machining position on the supporting plane. Each fixing member may comprise, as in the case in point, a suction unit 8 having an upper surface 8a that defines the resting plane 3 for the workpiece 1. Each suction unit 8 will be connected to sucking means (known and not illustrated) configured for generating a vacuum. This vacuum will operate on each suction unit 8 to lock the workpiece 1 stably. The workpiece locking means may comprise (in addition or alternatively to the suction locking means created by the suction units 8), mechanical clamping means of a jaw or clamp type or of any other type.

Each crosspiece 6 may be slidably supported on the longitudinal beams 7 (that are parallel to one another) in such a manner as to enable the crosspieces 6 to be positioned stably and in relation to one another along the longitudinal axis X of the machining centre 2 (see arrows F6). After adjustment, the crosspieces 6 can be stably locked in position. The position of each crosspiece 6 along the axis X may be adjusted by manual sliding (by an operator) on the beams 7, or automatically by means of an automatic movement system (of known type and not shown) connected to the control unit 12 to move the crosspieces 6 along the axis X independently of one another.

Similarly, each suction unit 8 may be slidably adjustable in position along the corresponding crosspiece 6, i.e. along the transverse axis Y arranged transversely (perpendicularly) to the first axis X (see arrows F8). Each suction unit 8, 8' will, in particular, be slidably coupled with the corresponding crosspiece 6 on sliding guides and may be moved, for example, by a kinematic chain system 51. The position of each suction unit may be adjusted along the Y axis by manual sliding (performed by an operator) on the respective crosspiece 6, or automatically by an automatic movement system (for example by subordinating the kinematic system 51 to the control unit 12) connected to the control unit 12 to move the suction units along the axis Y independently of one another.

It is possible, as in this specific example, for each suction unit 8, 8' being provided with movement means 10 along a third vertical axis Z, to move the height of the corresponding upper surface 8a defining the resting plane of the panel 1, thus determining raising or lowering of the panel 1. The vertical movement means 10 may be for example, the means disclosed in patent publication EP 1872919, which is incorporated here by way of reference.

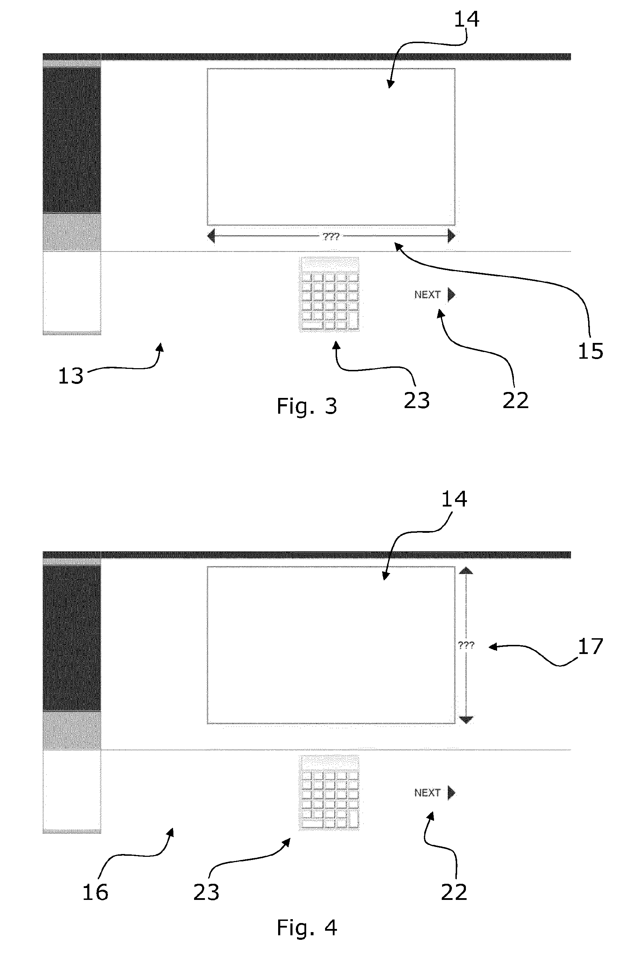

Below, with reference to figures 3 to 8, a guided procedure is disclosed for assisting an operator to enter data into a computer memory connected to the control unit.

The control unit 12 is programmed to show, on a screen of a graphic user interface connected to the control unit 12, a video page 13 comprising a pictogram 14 that represents the workpiece (figure 3). In the specific example the workpiece comprises a panel made of wood, for which the data relating to the main dimensions of the panel, i.e. width, length and thickness, have to be entered.

The video page 13 may further comprise a prompt to enter a first dimension of the workpiece. This prompt to enter a first dimension may comprise, as in the case in point, the presentation on the screen of a graphic highlighting of a first portion of the pictogram 14, in which this first portion is associated with the aforesaid first dimension. More in detail, the graphic highlighting comprises, in particular, the drawing of a linear dimension 15 (twin-tipped arrow) relating to the first dimension (for example the length of the panel in the direction of the longitudinal axis X) in which the prompt is given to the operator to enter the numeric value of the dimension (for example by showing at least one question mark in the position where this numeric value is normally present according to the standards of technical drawing, or by making a symbol flash in this position, etc).

The control unit 12 is programmed for receiving, in the computer memory connected to the control unit, a first datum relating to the first dimension.

The control unit 12 is programmed to show, after the first datum has been received, a video page 16 on the screen comprising the pictogram 14 that represents the workpiece together with a prompt to enter a second dimension of the workpiece (figure 4).

This prompt to enter the second dimension may comprise, similarly for the prompt for the first dimension (in figure 3), graphic highlighting of a second portion of pictogram associated with the aforesaid second dimension. The graphic highlighting may comprise (as in the video page 13) the drawing of a linear dimension 17 relating to the second dimension (for example the width of the panel in the direction of the transverse axis Y).

It is observed that, in the case in point, the control unit 12 is programmed to show the graphic highlighting of the second portion (width dimension 17) alternatively to, i.e. not as the same time as, the graphic highlighting of the first portion (length dimension 15) that is therefore not present on the video page 16 (figure 4).

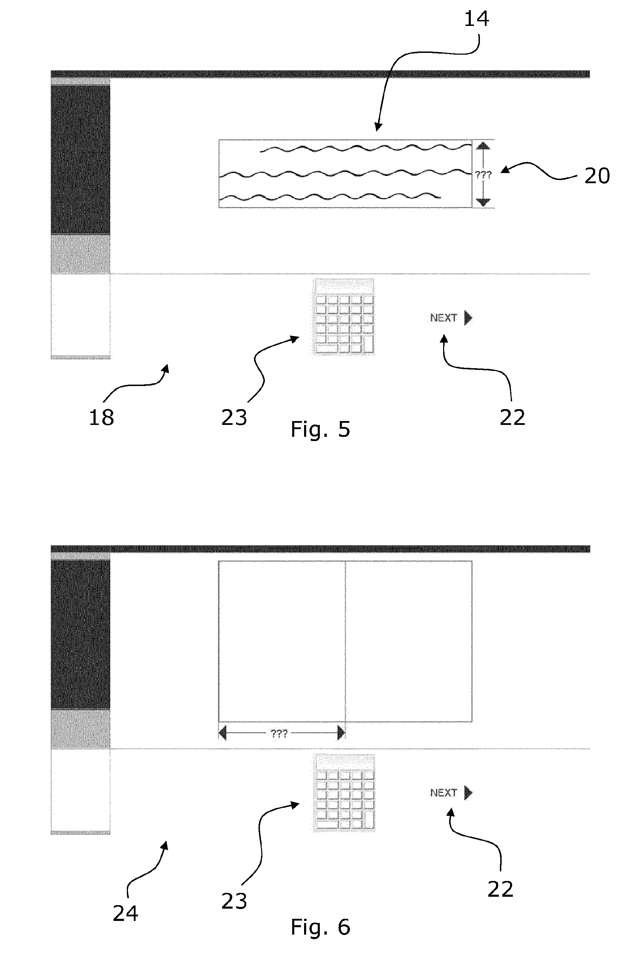

The control unit 12 is programmed for receiving, in the computer memory, a second datum relating to the aforesaid second dimension, and for showing on the screen, after receiving the second datum, a video page 18 with a pictogram 18 that represents the workpiece together with a prompt to enter a third dimension of the workpiece (figure 5). This prompt may comprise graphic highlighting of a third portion of pictogram associated with the aforesaid third dimension. This graphic highlighting may comprise the drawing of a linear dimension 20 relating to the third dimension (for example the thickness of the panel in the direction of the vertical axis Z).

It is observed that the control unit 12 may be programmed for supplying, after receiving the first datum, a prompt to confirm the aforesaid first datum. This prompt may comprise, in particular, a touch icon 22 (for example with the word "NEXT" and an arrow) to move to the next procedure step and/or a voice instruction (supplied by a voice user interface connected to the control unit 12) to induce a voice command to be emitted (for example "forwards" or "next" or the like).

The control unit 12 may be further programmed to receive confirmation of the first datum and to show the prompt to enter the second dimension in response to the aforesaid confirmation. The confirmation may be received after a preset touch icon (22) is touched and/or after the emission of a preset voice command.

The data (for example numeric values of dimensions of the workpiece or of machining positions on the workpiece) may be entered by voice commands via the voice user interface and/or the data can be keyed in (for example by using a touch keyboard 23 of the touchscreen).

The control unit 12 may be programmed for showing one or more help video pages for entering one or more positions relating to at least one machining that has to be performed on the workpiece.

For example, the control unit 12 may be programmed to show, in response to confirmation of the datum (workpiece thickness) entered with the help of the video page 18 of figure 5, a subsequent help video page 24 (figure 6) for entering a further dimension, in particular an intermediate length of the workpiece (for example halfway along the workpiece) at which specific machinings have to be performed.

Continuing, after inserting and confirming the intermediate length of the workpiece, the program may provide a further (optional) help video page 25 to introduce the numeric value of the diameter of a hole to be made in the workpiece. Obviously, it is possible to provide for other dimensional values (for example, other dimensions of the workpiece and/or other positions of machinings to be performed on the workpiece) to be entered into the computer memory, according to the type of workpiece (in particular in function of the conformation) thereof and of the type of machinings that have to be performed on the workpiece.

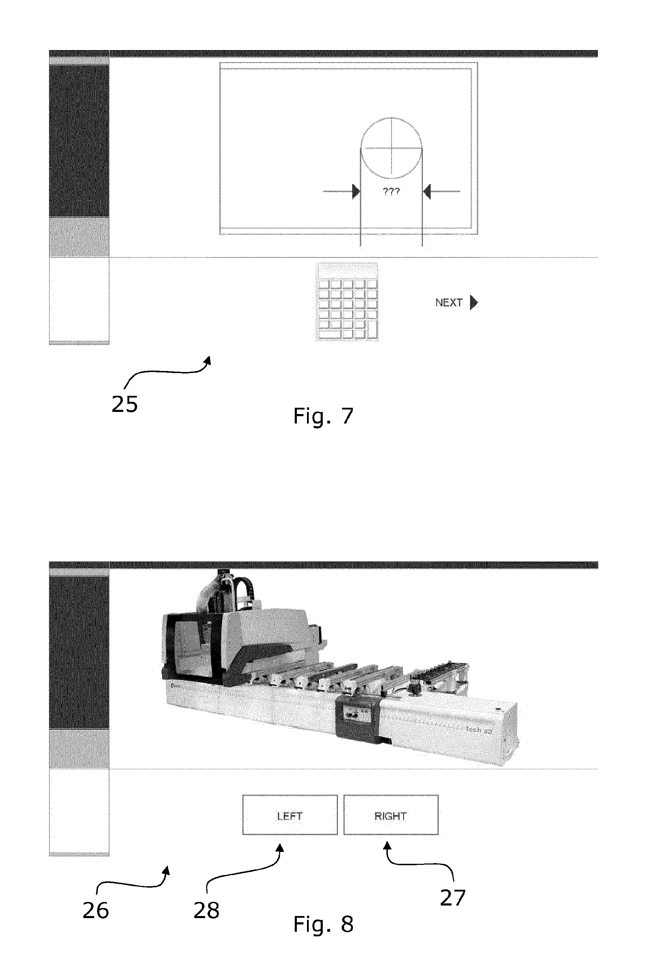

The control unit 12 may moreover be programmed to show, for example at the end of loading of the data relating to the dimensions of the workpiece and/or to the machining positions on the workpiece, a help video page 26 to prompt the operator choose the zone of the supporting plane where the workpiece should be positioned (figure 8). This video page 26 can comprise, for example, a pictogram showing the supporting plane and a plurality of icons (for example touch icons of the touchscreen) for selecting, for example, the right zone ("RIGHT" icon 27) or the left zone ("LEFT" icon 28) of the supporting plane. Alternatively, or in addition, it is possible to emit a voice instruction to prompt the operator to select one of some predefined voice commands (for example "right" or "destra" instead of "left" or "sinistra") via the voice user interface. Once the operator has chosen a selectable zone of the supporting plane (right zone or left zone), the control unit 12 automatically updates the apparatus settings on the basis of this choice.

## Claims

1. Method for assisting an operator to enter data into a computer memory connected to a control unit that governs an apparatus (2) for machining a workpiece (1) made of wood or a similar to wood material, said method comprising the steps of:
- showing, on a screen of a user interface, a pictogram (14; 19) that represents the workpiece and a first prompt to enter a dimensional value of the workpiece;
- receiving, in the computer memory, a first datum relating to said first dimensional value;
- showing on said screen a pictogram that represents the workpiece and a second prompt to enter a second dimensional value of the workpiece, said second prompt appearing on said screen after said first datum has been received.

2. Method according to claim 1, further comprising the steps of:
- receiving, in the computer memory, a second datum relating to said second dimensional value;
- after receiving said second datum, showing on said screen a pictogram that represents the workpiece and a prompt to enter a third dimensional value of the workpiece.

3. Method according to claim 1 or 2, wherein said prompt to enter a first dimensional value comprises a graphic highlighting (15; 17; 20) of a first portion of said pictogram (14; 19) associated with said first dimensional value.

4. Method according to claim 3, wherein said prompt to enter a second dimensional value comprises a graphic highlighting of a second portion of said pictogram associated with said second dimensional value, said control unit (12) being programmed for showing the graphic highlighting (17) of said second portion alternatively to and not simultaneously with the graphic highlighting (15) of said first portion.

5. Method according to any preceding claim, wherein said first and second dimensional values comprise at least one outline dimension of the workpiece and/or at least one position of a machining to be performed on the workpiece; in particular, the workpiece comprising a panel and said first and second dimensional values comprising width, length or thickness of said panel.

6. Method according to any preceding claim, wherein, after said first datum has been received, a prompt (22) is supplied to confirm said first datum, said control unit being programmed for receiving confirmation of said first datum and for showing the prompt to enter said second dimensional value in response to said confirmation.

7. Method according to claim 6, wherein said first datum is confirmed by a voice command through a voice user interface and/or by touching an icon on a touchscreen.

8. Method according to any preceding claim, wherein said step of receiving a first datum comprises detecting at least one voice command through a voice user interface and/or detecting at least one touch of an icon on a touchscreen.

9. Apparatus, in particular for implementing the method of any preceding claim, comprising:
- a supporting plane (3) of a workpiece (1) made of wood or a similar to wood material;
- at least one operating unit (4) operating above said supporting plane (3) and provided with one or more tools for performing machinings on the workpiece;
- a user interface;
- a programmable control unit (12) connected to said user interface;
- a computer readable medium having programme instructions executable by said control unit, wherein said instructions comprise the steps of:
showing, on a screen of a user interface, a pictogram (14; 19) that represents the workpiece and a prompt to enter a first dimensional value of the workpiece;
receiving, in the computer memory, a first datum relating to said first dimensional value;
after said first datum has been received, showing on said screen a pictogram that represents the workpiece and a prompt to enter a second dimensional value of the workpiece.

10. Computer readable medium having programme instructions that are executable by a processor for implementing a method for assisting an operator to enter data into a computer memory connected to a control unit that governs an apparatus for machining a workpiece made of wood or a similar to wood material, said instructions comprising the steps of the method according to any one of claims 1 to 8.

11. Computer programme comprising instructions for implementing a method for assisting an operator to enter data into a computer memory connected to a control unit that governs an apparatus for machining a workpiece made of wood or a similar to wood material, said programme instructions comprising the steps of the method according to any one of claims 1 to 8.
